# FASCICULE DE BREVET EUROPEEN

(11) **EP 3 689 578 B1**
(45) Date de publication et mention de la délivrance du brevet: **27.11.2024**
(21) Numéro de dépôt: 20154111.7
(22) Date de dépôt: 28.01.2020
(51) Int. Cl.: B29C 51/26, B29C 33/12, B29C 33/30, B29C 33/18, B29C 33/40, B25J 9/02, B25J 11/00, B29C 51/10, B29C 51/16, B29C 51/42, B29K 23/00, B29K 309/00, B29K 675/00, B29L 31/30

(54) **PROCÉDÉ DE FABRICATION D'UNE PIÈCE D'ÉQUIPEMENT DE VÉHICULE AUTOMOBILE ET INSTALLATION ASSOCIÉE**
HERSTELLUNGSVERFAHREN EINES AUSRÜSTUNGSTEILS EINES KRAFTFAHRZEUGS, UND ENTSPRECHENDE ANLAGE
METHOD FOR MANUFACTURING AN EQUIPMENT PART FOR A MOTOR VEHICLE AND ASSOCIATED INSTALLATION

(30) Priorité: 29.01.2019 FR 1900785
(43) Date de publication de la demande: 05.08.2020
(73) Titulaire: Adler Pelzer France Grand-Est, 08210 Mouzon (FR)
(72) Inventeur: HENRY, Julien, 08000 Charleville-Mezières (FR)
(74) Mandataire: Lavoix

(56) Documents cités:
- EP-A1- 1 518 663
- EP-A1- 1 627 720
- DE-T2- 69 627 578
- FR-A1- 2 870 682
- KR-B1- 101 874 910
- US-A1- 2003 011 174
- US-A1- 2012 091 698
- US-A1- 2016 375 613

## Description

La présente invention concerne un procédé de fabrication d'une pièce d'équipement, notamment de véhicule automobile du type comportant les étapes suivantes : thermoformage, contre un moule, d'un matériau composite comprenant au moins un polymère thermoplastique, ladite étape de thermoformage étant effectuée à une température apte à faire fondre l'au moins un polymère thermoplastique ; puis découpe dudit matériau composite.

L'invention s'applique particulièrement à la fabrication de pièces d'insonorisation, notamment pour les insonorisants entre l'habitacle et le compartiment moteur. En particulier, le procédé concerne le thermoformage et la découpe des matériaux de type « masse lourde ». Le thermoformage d'un tel matériau est notamment décrit dans le document FR2989305. Un procédé de thermoformage suivi d'une découpe par ultrasons est par exemple décrit dans US 2016/375613 A1.

Après l'étape de thermoformage, il est en général nécessaire de former une ou plusieurs découpes dans le matériau composite afin de définir un contour de la pièce finale.

Les techniques de découpe connues, telles que la découpe par jet d'eau ou à l'aide d'un outil tranchant, nécessitent que le polymère thermoplastique du matériau composite ait retrouvé sa solidité, ce qui permet une découpe franche. Cependant, une telle technique allonge la durée du procédé.

La présente invention a pour but de proposer un procédé de fabrication à durée raccourcie, tout en permettant l'obtention de pièces avec un niveau de finition optimal.

A cet effet, l'invention a pour objet un procédé du type précité, dans lequel : lors de l'étape de découpe, le matériau composite est disposé contre le moule ; la découpe est assistée par ultrasons ; et lors de l'étape de découpe, l'au moins un polymère thermoplastique est au moins partiellement dans un état visqueux.

Suivant d'autres aspects avantageux de l'invention, le procédé comporte l'une ou plusieurs des caractéristiques suivantes, prises isolément ou suivant toutes les combinaisons techniquement possibles :
- l'étape de découpe est effectuée au moyen d'une sonotrode comprenant une arête de découpe ;
- lors de l'étape de découpe, des vibrations sont appliquées à la sonotrode dans une gamme comprise entre 30 kHz et 40 kHz, préférentiellement proche de 35 kHz.

L'invention se rapporte en outre à une installation pour la mise en oeuvre d'un procédé tel que décrit ci-dessus, comprenant : un dispositif de thermoformage, comportant un moule préférentiellement muni de moyens de chauffage ; et un ensemble de découpe assistée par ultrasons, comportant une sonotrode comprenant une arête de découpe s'étendant sensiblement selon un premier axe ; le moule et la sonotrode étant mobiles l'un par rapport à l'autre.

Suivant d'autres aspects avantageux de l'invention, l'installation comporte l'une ou plusieurs des caractéristiques suivantes, prises isolément ou suivant toutes les combinaisons techniquement possibles :
- l'arête de découpe est apte à pivoter angulairement autour d'un deuxième axe sensiblement perpendiculaire au premier axe ;
- l'arête de découpe est apte à pivoter angulairement autour d'un troisième axe sensiblement perpendiculaire aux premier et deuxième axes ;
- l'arête de découpe présente une épaisseur comprise entre 0,1 mm et 5 mm ;
- l'arête de découpe présente une forme recourbée convexe.

L'invention sera mieux comprise à la lecture de la description qui va suivre, donnée uniquement à titre d'exemple non limitatif et faite en se référant aux dessins sur lesquels :
- [Fig 1] la figure 1 est une vue schématique d'une installation de mise en oeuvre d'un procédé selon un mode de réalisation de l'invention ; et
- [Fig 2] [Fig 3] les figures 2 et 3 sont des vues de détail de l'installation de la figure 1.

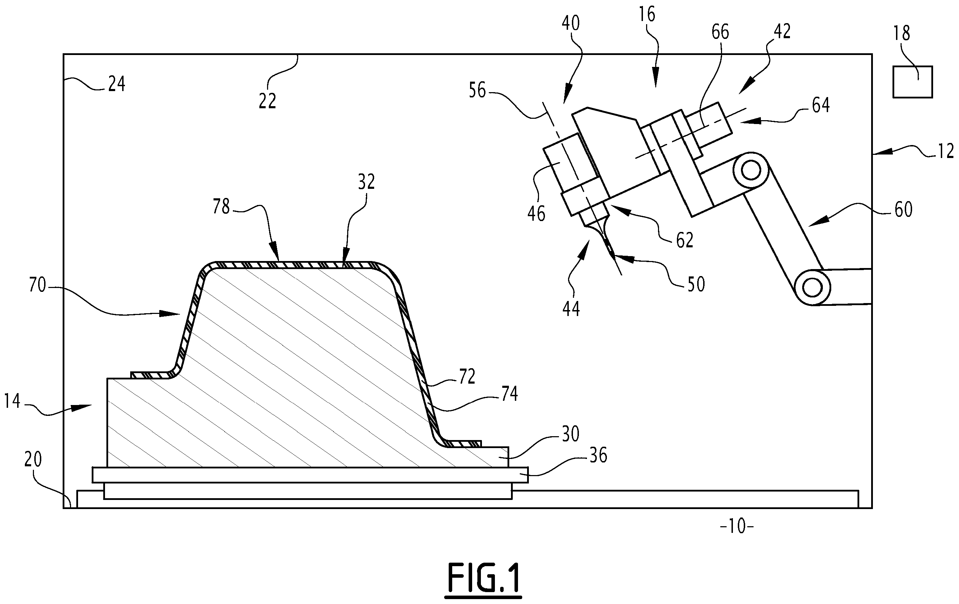

La figure 1 représente une installation 10 de fabrication d'une pièce d'équipement de véhicule automobile.

L'installation 10 comporte notamment une enceinte 12, ainsi qu'un dispositif 14 de thermoformage et un ensemble 16 de découpe situés à l'intérieur de ladite enceinte. L'installation 10 comporte également un module électronique 18 de commande.

L'enceinte 12 comporte par exemple un plancher 20, un plafond 22 et des parois latérales 24 qui définissent un volume interne.

Le dispositif de thermoformage 14 comporte notamment un moule 30 définissant une surface 32 de thermoformage.

De manière optionnelle, le dispositif de thermoformage 14 comporte en outre un élément chauffant (non représenté) apte à chauffer le moule 30 au niveau de la surface de thermoformage 32.

De manière optionnelle, l'installation 10 comporte en outre un support 36 sur lequel est disposé le moule 30, ledit support 36 étant mobile par rapport au plancher 20 de l'enceinte 12.

L'ensemble de découpe 16 comporte un dispositif de découpe 40 et un dispositif de déplacement 42.

Le dispositif de découpe 40 comprend : un outil de découpe ou sonotrode 44 ; un générateur 46 d'ultrasons, ou convertisseur, couplé à ladite sonotrode 44 ; et éventuellement un amplificateur électrique.

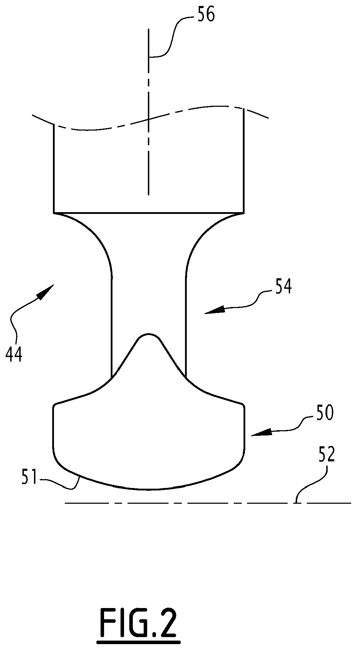

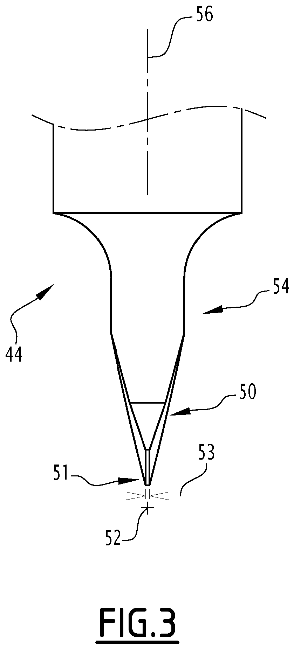

Les figures 2 et 3 représentent des vues de détail de la sonotrode 44. Ladite sonotrode comporte une lame 50 métallique, par exemple réalisée en titane ou en alliage de titane. Ladite lame comprend une arête 51 de découpe s'étendant sensiblement selon un premier axe 52. Dans le mode de réalisation des figures 2 et 3, l'arête 51 a une forme légèrement recourbée, de forme convexe. En variante non représenté, l'arête de découpe a une forme en V.

L'arête 51 présente par exemple une épaisseur 53 comprise entre 0,1 mm et 5 mm.

La sonotrode 44 comporte en outre une tige 54 s'étendant selon un deuxième axe 56, sensiblement perpendiculaire au premier axe 52. La tige 54 est adjacente à la lame 50 à l'opposé de l'arête 51 par rapport au deuxième axe 56.

Le générateur d'ultrasons 46 est relié mécaniquement à la tige 54. Ledit générateur 46 est apte à faire vibrer la lame 50 de la sonotrode 44 à une fréquence ultrasonique, préférentiellement dans une gamme de 30 à 40 kHz, plus préférentiellement autour de 35 kHz.

Le dispositif 42 de déplacement comprend par exemple un bras articulé 60, relié d'une part au dispositif de découpe 40 et d'autre part à une paroi 24 de l'enceinte 12. Le dispositif 42 comprend en outre au moins un premier dispositif rotatif 62, apte à faire pivoter angulairement la sonotrode 44 autour du deuxième axe 56.

De manière optionnelle, le dispositif 42 comprend en outre un deuxième dispositif rotatif 64, apte à faire pivoter angulairement la sonotrode 44 autour d'un troisième axe 66, sensiblement perpendiculaire aux premier 52 et deuxième 56 axes.

Le module électronique 18 est électroniquement relié aux éléments décrits ci-dessus.

Un procédé d'une pièce d'équipement de véhicule automobile va maintenant être décrit. Les étapes dudit procédé sont notamment mises en oeuvre par un programme mémorisé dans le module électronique 18.

Dans une première étape du procédé, une pièce intermédiaire 70 est réalisée par thermoformage, contre le moule 30, d'un matériau composite 72 comprenant au moins un polymère thermoplastique 74 et des matériaux de renfort.

Le matériau composite 72 est notamment un matériau de type « masse lourde », adapté à la réalisation d'une pièce d'isolation acoustique, en particulier d'un revêtement pour un plancher ou un tablier d'habitacle de véhicule automobile, et/ou pour la réalisation d'une pièce d'habillage, notamment pour un véhicule automobile.

La pièce intermédiaire 70 présente par exemple une masse surfacique comprise entre 2 et 7 kg/m², et une masse volumique relativement élevée, de l'ordre de 2000 kg/m³. Par exemple, l'au moins un polymère thermoplastique 74 est à base de polyoléfine, de copolymère d'éthylène et d'acétate de vinyle, de polymère Ethylène Propylène Diène Monomère (EPDM) ou d'un mélange de ces polymères. De préférence, le matériau composite 72 comporte également des charges à base de craie ou de sulfate de baryum.

La pièce intermédiaire 70 est par exemple réalisée selon un procédé de type nappage, tel que décrit dans le document FR2989305.

Puis une étape de découpe est mise en oeuvre, sur la pièce intermédiaire 70 reçue dans le moule 30. Ladite découpe est effectuée avant refroidissement total de la pièce intermédiaire 70, alors que le polymère thermoplastique 74 du matériau composite 72 est encore au moins partiellement dans un état visqueux. Ladite découpe est effectuée selon un tracé 78 mémorisé dans le module électronique 18. De préférence, ledit tracé 78 est disposé sur la surface de thermoformage 32.

Dans le mode de réalisation représenté, le tracé 78 forme un contour fermé de sorte à réaliser une ouverture intérieure dans la pièce intermédiaire 70. En variante non représentée, le tracé 78 est disposé sur un pourtour de ladite pièce intermédiaire.

Durant l'étape de découpe, la lame 50 de la sonotrode 44 parcourt le tracé 78 tandis que le générateur 46 imprime des vibrations ultrasoniques à ladite lame. La sonotrode 44 est déplacée le long du tracé 78 au moyen du dispositif de déplacement 42, qui permet à la lame 50 de se mouvoir dans plusieurs directions et/ou orientations, selon une trajectoire complexe.

L'utilisation, comme décrit ci-dessus, d'une découpe assistée par ultrasons permet de façon surprenante de découper avec une précision suffisante un matériau au moins partiellement visqueux, tel que le matériau composite 72.

Par ailleurs, l'utilisation des ultrasons combinée à l'état visqueux du composite permet d'éviter la formation de débris de découpe qui pourraient adhérer à la lame 50 et/ou se répandre à l'intérieur de l'enceinte 12. Ainsi, la sonotrode 44 reste propre au cours de l'étape de découpe.

A la fin de l'étape de découpe et après refroidissement complet du matériau composite 72, la pièce d'équipement ainsi obtenue est éventuellement dissociée du moule 30. Alternativement, le moule 30 supportant ladite pièce est alors assemblé à un contre-moule (non représenté) de sorte à définir une cavité de moussage. Une mousse, par exemple de polyuréthane, est ensuite ajoutée à la pièce d'équipement. Une pièce d'isolation acoustique peut être ainsi obtenue, comme décrit dans le document FR2989305.

Le procédé ci-dessus permet de raccourcir la durée de fabrication de la pièce d'équipement. En effet, contrairement aux techniques de découpe connues, l'étape de découpe dudit procédé est mise en oeuvre pendant le refroidissement du matériau composite, et non après ledit refroidissement.

## Revendications

1. Procédé de fabrication d'une pièce d'équipement, notamment de véhicule automobile, comprenant les étapes suivantes :
- thermoformage, contre un moule (30), d'un matériau composite (72) comprenant au moins un polymère thermoplastique (74), ladite étape de thermoformage étant effectuée à une température apte à faire fondre l'au moins un polymère thermoplastique ;
ladite étape de thermoformage étant réalisée contre un moule (30) définissant une surface (32) de thermoformage ; puis
- découpe dudit matériau composite ;
**caractérisé en ce que** :
- lors de l'étape de découpe, le matériau composite (72) est disposé contre le moule (30) ;
- la découpe est assistée par ultrasons et effectuée selon un tracé (78) disposé sur la surface de thermoformage (32) ; et
- l'étape de découpe est réalisée avant refroidissement total du matériau composite, l'au moins un polymère thermoplastique (74) étant au moins partiellement dans un état visqueux durant ladite étape de découpe.

2. Procédé de fabrication selon la revendication 1, dans lequel l'étape de découpe est effectuée au moyen d'une sonotrode (44) comprenant une arête (51) de découpe.

3. Procédé de fabrication selon la revendication 2, dans lequel, lors de l'étape de découpe, des vibrations sont appliquées à la sonotrode (44) dans une gamme comprise entre 30 kHz et 40 kHz, préférentiellement proche de 35 kHz.

4. Installation (10) pour la mise en oeuvre d'un procédé selon l'une des revendications précédentes, comprenant :
- un dispositif (14) de thermoformage, comportant un moule (30) préférentiellement muni de moyens de chauffage ; et
- un ensemble (16) de découpe assistée par ultrasons, comportant une sonotrode (44) comprenant une arête (51) de découpe s'étendant sensiblement selon un premier axe (52) ; le moule et la sonotrode étant mobiles l'un par rapport à l'autre.

5. Installation selon la revendication 4, dans laquelle l'arête (51) de découpe est apte à pivoter angulairement autour d'un deuxième axe (56) sensiblement perpendiculaire au premier axe.

6. Installation selon la revendication 5, dans laquelle l'arête (51) de découpe est apte à pivoter angulairement autour d'un troisième axe (66) sensiblement perpendiculaire aux premier et deuxième axes.

7. Installation selon l'une des revendications 4 à 6, dans laquelle l'arête (51) de découpe présente une épaisseur (53) comprise entre 0,1 mm et 5 mm.

8. Installation selon l'une des revendications 4 à 7, dans laquelle l'arête (51) de découpe présente une forme recourbée convexe.

## Patentansprüche

1. Herstellungsverfahren eines Ausrüstungsteils, insbesondere eines Kraftfahrzeugs, umfassend die folgenden Schritte:
- Thermoformen eines Verbundmaterials (72), umfassend mindestens ein thermoplastisches Polymer (74), gegen eine Form (30), wobei der Schritt eines Thermoformens bei einer Temperatur durchgeführt wird, die geeignet ist, um das mindestens eine thermoplastische Polymer schmelzen zu lassen;
wobei der Schritt eines Thermoformens gegen eine Form (30) durchgeführt wird, die eine Thermoformungsfläche (32) definiert; und dann
- Schneiden des Verbundmaterials;
**dadurch gekennzeichnet, dass**:
- bei dem Schritt eines Schneidens das Verbundmaterial (72) gegen die Form (30) angeordnet ist;
- das Schneiden ultraschallunterstützt ist und entlang einer auf der Thermoformungsfläche (32) angeordneten Linie (78) durchgeführt wird; und
- der Schritt eines Schneidens vor dem vollständigen Abkühlen des Verbundmaterials durchgeführt wird, wobei das mindestens eine thermoplastische Polymer (74) während des Schritts eines Schneidens zumindest teilweise in einem viskosen Zustand ist.

2. Herstellungsverfahren nach Anspruch 1, wobei der Schritt eines Schneidens mit einer Sonotrode (44) umfassend eine Schneidkante (51) durchgeführt wird.

3. Herstellungsverfahren nach Anspruch 2, wobei während des Schritts eines Schneidens Vibrationen auf die Sonotrode (44) in einem Bereich zwischen 30 kHz und 40 kHz, vorzugsweise nahe 35 kHz, ausgeübt werden.

4. Anlage (10) zur Implementierung eines Verfahrens nach einem der vorherigen Ansprüche, umfassend:
- eine Vorrichtung (14) zum Thermoformen, umfassend eine Form (30), die vorzugsweise mit Heizeinrichtungen versehen ist; und
- eine Einheit (16) zum ultraschallunterstützten Schneiden mit einer Sonotrode (44), umfassend eine Schneidkante (51), die sich im Wesentlichen entlang einer ersten Achse (52) erstreckt; wobei die Form und die Sonotrode in Bezug aufeinander beweglich sind.

5. Anlage nach Anspruch 4, wobei die Schneidkante (51) winkelmäßig um eine zweite Achse (56) schwenkbar ist, die im Wesentlichen senkrecht zu der ersten Achse ist.

6. Anlage nach Anspruch 5, wobei die Schneidkante (51) winkelmäßig um eine dritte Achse (66) schwenkbar ist, die im Wesentlichen senkrecht zu der ersten und der zweiten Achse ist.

7. Anlage nach einem der Ansprüche 4 bis 6, wobei die Schneidkante (51) eine Stärke (53) aufweist, die zwischen 0,1 mm und 5 mm liegt.

8. Anlage nach einem der Ansprüche 4 bis 7, wobei die Schneidkante (51) eine konvex gebogene Form aufweist.

## Claims

1. A manufacturing method for a piece of equipment, in particular for a motor vehicle, comprising the following steps:
- thermoforming, against a mould (30), of a composite material (72) comprising at least one thermoplastic polymer (74), the said thermoforming step being carried out at a temperature capable of melting the at least one thermoplastic polymer;
said thermoforming step being carried out against a mould (30) defining a thermoforming surface (32); then
- cutting said composite material;
**characterised in that**:
- during the cutting step, the composite material (72) is placed against the mould (30);
- cutting is assisted by ultrasound and carried out according to a trace (78) arranged on the thermoforming surface (32); and
- the cutting step is carried out before the composite material has cooled completely, the at least one thermoplastic polymer (74) being at least partially in a viscous state during said cutting step.

2. A manufacturing method according to claim 1, in which the cutting step is carried out by means of a sonotrode (44) comprising a cutting edge (51).

3. A manufacturing method according to claim 2, in which, during the cutting step, vibrations are applied to the sonotrode (44) in a range between 30 kHz and 40 kHz, preferably close to 35 kHz.

4. An installation (10) for carrying out a process according to one of the preceding claims, comprising:
- a thermoforming device (14) comprising a mould (30) preferably fitted with heating means; and
- an ultrasound-assisted cutting assembly (16), comprising a sonotrode (44) including a cutting edge (51) extending substantially along a first axis (52); the mould and the sonotrode being movable relative to each other.

5. An installation as claimed in claim 4, in which the cutting edge (51) is able to pivot angularly about a second axis (56) substantially perpendicular to the first axis.

6. An installation as claimed in claim 5, in which the cutting edge (51) is able to pivot angularly about a third axis (66) substantially perpendicular to the first and second axes.

7. An installation according to one of claims 4 to 6, in which the cutting edge (51) has a thickness (53) of between 0.1 mm and 5 mm.

8. An installation according to one of claims 4 to 7, in which the cutting edge (51) has a convex curved shape.
